# EUROPÄISCHE PATENTSCHRIFT

(11) **EP 4 176 760 B1**
(45) Veröffentlichungstag und Bekanntmachung des Hinweises auf die Patenterteilung: **19.06.2024**
(21) Anmeldenummer: 22190824.7
(22) Anmeldetag: 17.08.2022
(51) Int. Cl.: A45C 13/10, A45C 13/12, B65D 55/14, E05B 65/52, A44B 11/25, F16B 21/16

(54) **SCHLIESSVORRICHTUNG FÜR EIN BEHÄLTNIS**
CLOSING DEVICE FOR A CONTAINER
DISPOSITIF DE FERMETURE POUR UN RÉCIPIENT

(30) Priorität: 09.11.2021 DE 102021129074
(43) Veröffentlichungstag der Anmeldung: 10.05.2023
(73) Patentinhaber: Sudhaus GmbH, 58644 Iserlohn (DE)
(72) Erfinder: Keidel, Stephan, Dr., 65719 Hofheim (DE)
(74) Vertreter: Köchling, Conrad-Joachim

(56) Entgegenhaltungen:
- EP-B1- 3 511 494
- DE-U1-202010 010 300
- US-A- 5 560 660

## Beschreibung

Die Erfindung betrifft eine Schließvorrichtung für ein Behältnis wie beispielsweise ein Tornister oder ein Rucksack, zumindest aufweisend ein Aufnahmeteil, welches an einer Außenwandung des Behältnisses angeordnet und dort befestigt ist, welches einen muldenartigen Aufnahme- und Befestigungsbereich aufweist, und ein Halteteil, welches an einem relativ zur Außenwandung verschwenkbaren oder verschwenkten Deckelteil des Behältnisses angeordnet und befestigt ist, wobei das Halteteil einen in Richtung des Aufnahmebereichs vorragenden Verbindungs- und Verriegelungsbereich aufweist, der zur Verbindung und Verriegelung des Halteteils am Aufnahmeteil in dessen muldenartigen Aufnahmebereich einführbar oder eingeführt ist und in der eingeführten Lage dort mittels hakenartiger Vorsprünge, die Teile des muldenartigen Aufnahmebereichs hintergreifen, gehalten und verriegelt ist, wobei an der dem Aufnahmeteil abgewandten Seite des Halteteils Betätigungsmittel angeordnet sind, die bei Betätigung die hakenartigen Vorsprünge in eine Lage verstellen, in der die Verhakung hinter Teilen des muldenartigen Aufnahmebereichs aufgehoben ist, sodass das Deckelteil mitsamt des Halteteils von dem auf der Außenwandung angeordneten Aufnahmeteil abnehmbar und gegenüber der Außenwandung verschwenkbar ist.

Zudem betrifft die Erfindung ein Behältnis, insbesondere einen Rucksack oder einen Tornister mit einer Schließvorrichtung.

Derartige Schließvorrichtungen sind insbesondere für Tornister oder Rucksäcke im Stand der Technik bekannt und weit verbreitet.

Die DE 20 2010 010 300 U1 offenbart eine Verschlussvorrichtung, mit einem ersten Verbindungsmodul und einem zweiten Verbindungsmodul, wobei das erste Verbindungsmodul in eine Schließrichtung an dem zweiten Verbindungsmodul anordbar und in einer Schließstellung mit dem zweiten Verbindungsmodul mechanisch verrastet ist, wobei das erste Verbindungsmodul durch eine Bewegung des ersten Verbindungsmoduls oder eines Teils des ersten Verbindungsmoduls in eine Öffnungsrichtung, die sich von der Schließrichtung unterscheidet, vom zweiten Verbindungsmodul lösbar ist, wobei eine entriegelbare Verriegelungsvorrichtung zum Verhindern einer Bewegung des ersten Verbindungsmoduls oder des Teils des ersten Verbindungsmoduls in die Öffnungsrichtung, wenn sich das erste Verbindungsmodul und das zweite Verbindungsmodul in der Schließstellung befinden, vorgesehen ist.

Bei derartigen mechanischen Schließvorrichtungen ist in der Regel das Aufnahmeteil an der Außenwandung des

Behältnisses angeordnet und dient dazu, ein entsprechendes Halteteil, welches an dem relativ zur Außenwandung verschwenkbaren Deckelteil des Behältnisses angeordnet und befestigt ist, aufzunehmen und dort in der aufgenommenen Stellung gegen ungewünschtes Lösen zu verriegeln.

Zur vereinfachten Zuführung des Halteteils in das Aufnahmeteil ist es im Stand der Technik auch bekannt, Magnete beziehungsweise ferromagnetische Elemente im Aufnahmeteil und im Halteteil anzuordnen, die sich einander anziehen und somit die Zuführung des Halteteils in das Aufnahmeteil erleichtern.

Nach der erfolgten Zuführung des Halteteils in den Aufnahmebereich des Aufnahmeteils erfolgt üblicherweise eine Verriegelung durch Verrastung oder dergleichen hakenartige Vorsprünge, die Teile des Aufnahmebereichs, der häufig muldenartig ausgebildet ist, hintergreifen und dort in der hintergreifenden Stellung quasi das Halteteil am Aufnahmeteil verriegeln.

Zur Lösung dieser Verriegelung sind im Stand der Technik Betätigungsmittel bekannt, die entweder durch beispielsweise Zusammendrücken zweier Teile eines entsprechenden Betätigungsmittels die Verriegelung lösen oder die durch Verschwenken beispielsweise eines Griffteils die Verriegelung lösen um somit das Halteteil mitsamt des Deckelteils des Behältnisses von dem Aufnahmeteil zu entfernen.

Aufgrund des Eingangs genannten Standes der Technik liegt der vorliegenden Erfindung die Aufgabe zugrunde, eine Schließvorrichtung der eingangs genannten Art derart weiter zu bilden, dass deren Bedienung hinsichtlich der Lösung der Verriegelung also des Öffnen des Deckelteils des Behältnisses gegenüber im Stand der Technik bekannten Lösungen vereinfacht ist, wobei eine Entriegelung sowohl durch Zusammendrücken von Teilen mit zwei Fingern als auch durch Betätigung eines Griffteils mit nur einem Finger ermöglicht ist, die dabei kostengünstig und einfach zu fertigen ist und eine hohe Lebensdauer bei einer hohen Anzahl von Betätigungen aufweist.

Zur Lösung dieser Aufgabe schlägt die Erfindung vor, dass das Halteteil eine Grundplatte mit gegenüber der Grundplatte aufeinander zu und voneinander weg verschiebbaren Schubelementen als erstes Betätigungsmittel aufweist, wobei an jedem Schubelement je ein abragender und das Deckelteil durchgreifender und in den Aufnahmebereich des Aufnahmeteils eingreifender und dort verhakender Steg angeordnet ist, wobei zur Verhakung und somit zur Verriegelung des Halteteils an dem Aufnahmeteil am freien Ende des Stegs je ein hakenartiger Vorsprung ausgebildet ist, wobei die Schubelemente jeweils durch die Kraft einer ersten Feder in einer einander angenäherten Lage gehalten sind, und wobei die hakenartigen Vorsprünge in der weiter voneinander entfernten Lage der Schubelemente Teile des muldenartigen Aufnahmebereichs hintergreifen und dort verhaken, wobei ferner ein gegenüber der Grundplatte verschwenkbarer Betätigungsgriff als weiteres Betätigungsmittel angeordnet ist, der gegen die Kraft einer zweiten Feder in der verriegelten Lage gehalten ist, wobei in dieser Lage Teile des Betätigungsgriffs zwischen den Schubelementen angeordnet sind und die Schubelemente sperren beziehungsweise ein Annähern der Schubelemente verhindern.

Einerseits kann durch die Schubelemente auf an sich bekannte Art und Weise durch Annähern der Schubelemente, welches üblicherweise durch das Verschieben der Schubelemente mit zwei Fingern in eine sich annähernde Richtung, erfolgen. Andererseits kann bei der erfindungsgemäßen Lösung alternativ auch die Öffnung, also das Lösen der Verriegelung durch die Betätigung eines entsprechenden Betätigungsgriffs mit nur einem Finger erfolgen.

Somit kann durch die erfindungsgemäße Lösung der Benutzer entscheiden, ob er die ihm bereits bekannte Lösung mittels zwei sich einander annähernder Schubelemente zur Entriegelung und somit Öffnung des Behältnisses verwendet, oder ob er die Entriegelung zur Öffnung des Deckelteils durch Betätigung des Betätigungsgriffs mit nur einem Finger wählt.

Dabei ermöglichen sowohl die Betätigung des Betätigungsgriffs als auch das aufeinander zuschieben der Schubelemente eine äußerst hohe Anzahl von Öffnungsvorgängen durch einen Benutzer ohne Verschleiß zu nehmen, so dass eine hohe Lebensdauer ermöglicht ist.

Zudem ist hiermit eine Öffnung des Deckelteils auf besonders einfache und intuitive Art und Weise ermöglicht, da zwei besonders weit auf dem Markt derartiger Behältnisse verbreitete Lösungen zur Entriegelung in der erfindungsgemäßen Schließvorrichtung vereint sind.

Bei dieser erfindungsgemäßen Lösung durchgreifen die jeweils von einem Schubelement abragenden Stege das Deckelteil und greifen in den Aufnahmebereich des Aufnahmeteils ein um dort mit den am Endbereich der Stege ausgebildeten hakenartigen Vorsprünge hinter entsprechenden Teilen des Aufnahmebereichs des Aufnahmeteils zu verhaken. In dieser nach Art einer Rastung gebildeten Verriegelung ist das Halteteil mitsamt des Deckelteils des Behältnisses sicher am Aufnahmeteil, welches an der Wandung des Behältnisses angeordnet und befestigt ist, gehalten. Erst nach Betätigung entweder der Schubelemente in eine Richtung, in der sich die Schubelemente einander annähern, werden die hakenartigen Vorsprünge aus der Verriegelungslage in eine Freigabelage verschoben, sodass das Halteteil mitsamt des Deckelteils aus dem Aufnahmeteil auf an sich bekannte Art und Weise entfernbar ist. Alternativ kann auch der Betätigungsgriff mit nur einem Finger verschwenkt und somit betätigt werden, sodass durch die Kraft der ersten Federn die Schubelemente einander angenähert werden, sodass wiederum die hakenartigen Vorsprünge nicht mehr entsprechende Teile des Aufnahmeteils hintergreifen und dort verhaken. Somit ist auch durch die Betätigung des Betätigungsgriffs auf besonders schnelle und einfache Art und Weise ein Lösen der Verriegelung und somit Entfernen des Halteteils aus dem Aufnahmeteil heraus ermöglicht.

Insbesondere kann besonders bevorzugt vorgesehen sein, dass die Schubelemente an ihren jeweils benachbarten Seitenbereichen jeweils eine Schräge als Gleitfläche aufweisen, die während des Verstellens in die Verriegelungslage von einer am Betätigungsgriff ausgebildeten Kontur kontaktiert ist und die die Schubelemente gegen die Kraft der ersten Federn in die Verriegelungslage verschiebt, in der der Abstand zwischen den beiden Schubelementen vergrößert ist, die nach Erreichen der Verriegelungslage zwischen den als Gleitfläche ausgebildeten Schrägen angeordnet ist, wobei an der jeweiligen Schräge je einer der in den Aufnahmebereich des Aufnahmeteils eingreifenden und dort verhakenden Stege mit hakenartigem Vorsprung angeordnet ist.

Durch die Anordnung derartiger Schrägen als Gleitflächen kann auf besonders einfache und eine hohe Anzahl von Betätigungsvorgängen ermöglichende Art und Weise der Betätigungsgriff die Schubelemente in die weiter voneinander entfernte Lage verschieben, sodass in dieser Lage die Verriegelung durch die hakenartigen Vorsprünge an den freien Enden der Stege erfolgt. Der Betätigungsgriff wird dabei ebenfalls durch die zweite Feder in dieser verriegelten Lage, in der Teile des Betätigungsgriffs die als Gleitfläche ausgebildeten Schrägen kontaktieren und quasi voneinander wegbewegen, gehalten. Die zweite Feder hält somit den Betätigungsgriff in der verriegelten Lage und ist derart ausgebildet, dass ohne händische Betätigung der Betätigungsgriff die Schrägen nach außen verdrängt, sodass die Schubelemente in eine weiter voneinander entfernte Lage verstellt sind, die gleichzeitig die Verriegelungslage der Stege mit hakenartigen Vorsprüngen bildet.

Zudem kann besonders bevorzugt vorgesehen sein, dass die Verschwenkung des Betätigungsgriffs gegenüber der Grundplatte des Halteteils entlang einer nahe einer Seitenrandkante des Halteteils angeordneten Schwenkachse erfolgt.

Hierdurch ist ein besonders einfaches Bedienen des Betätigungsgriffs mit nur einem Finger ermöglicht, da dieser Betätigungsgriff auf besonders einfache Art und Weise von nur einem Finger eines Benutzers des Behältnisses hintergriffen und gezogen werden kann, um den Betätigungsgriff um die an der Seitenrandkante des Halteteils angeordnete Schwenkachse zu verschwenken und um die gegen die Kraft der ersten Feder gehaltenen Schubelemente frei zu geben sodass diese durch die Kraft der ersten Federn in die Freigabelage der Stege mit hakenartigen Vorsprüngen verschoben werden, ohne dass durch den Benutzer eine weitere Betätigung beispielsweise der Schubelemente erfolgen muss.

Dabei kann besonders bevorzugt vorgesehen sein, dass die zweite Feder durch eine Schenkelfeder gebildet ist, die auf oder nahe der Schwenkachse angeordnet ist und deren erste Schenkel an der Grundplatte und deren zweite Schenkel am Betätigungsgriff angeordnet und befestigt sind, wobei die Verschwenkung des Betätigungsgriffs in eine von der Grundplatte entfernte Öffnungsrichtung gegen die Kraft der Schenkelfeder erfolgt.

Die Verwendung einer derartigen Schenkelfeder als zweite Feder die auf die beschriebene Art und Weise angeordnet ist, hat sich besonders bewährt und ermöglicht eine besonders hohe Anzahl von Bedienvorgängen des Betätigungsgriffes.

Darüber hinaus kann besonders bevorzugt vorgesehen sein, dass am Betätigungsgriff ein erstes magnetisches Element und an dem Aufnahmeteil an einem dem ersten magnetischen Element benachbarten Bereich ein zweites magnetisches Element jeweils angeordnet ist, wobei das erste und das zweite magnetische Element aneinander anziehend angeordnet sind, sodass in der verriegelten Lage die magnetischen Elemente nah aneinander angeordnet sind und zum einen der Betätigungsgriff in dieser Lage unterstützend durch die Magnetkraft gehalten ist und zum anderen das Halteteil am Aufnahmeteil gehalten ist.

Die Anordnung derartiger, sich anziehender magnetischer Elemente zur vereinfachten Zuführung und um einen gewissen Halt der Teile aneinander zu ermöglichen ist an sich bekannt und hat sich bewährt.

Dabei stellt die Verwendung derartiger ferromagnetischer Elemente eine zusätzliche Erleichterung der Bedienung, insbesondere bei der Zuführung des Halteteils in den Aufnahmebereich des Aufnahmeteils dar.

Weiter kann besonders bevorzugt vorgesehen sein, dass das Aufnahmeteil aus einem Unterteil mit einem Unterteildeckel und einer Hinterplatte besteht, wobei das Unterteil den muldenartigen Aufnahme- und Befestigungsbereich und der Unterteildeckel eine dazu etwa deckungsgleiche Ausnehmung aufweist.

Eine derartige mehrteilige Ausführung stellt eine besonders stabile und somit langlebige Ausführung des Aufnahmeteils dar, wodurch insbesondere auch eine hohe Anzahl von Schließ- und somit Verriegelungsvorgängen und anschließend wieder Entriegelungsvorgängen ermöglicht ist.

In einem besonders bevorzugten Ausführungsbeispiel kann vorgesehen sein, dass am Unterteil im Bereich der in der verriegelten Lage eingreifenden und dort verhakenden Stege weitere Sperrmittel, beispielsweise jeweils an einer Seitenrandkante des Aufnahmebereichs des Aufnahmeteils ein gegen die Kraft einer dritten Feder in der Sperrlage vorgespannter Sperrschieber, angeordnet ist oder sind, wobei jedes Sperrmittel gegen die Kraft der dritten Feder in eine Freigabelage verschiebbar ist.

Die Anordnung derartiger gegen die Kraft einer dritten Feder wirkender erfindungsgemäßer weiterer Sperrmittel kann das sichere Zuführen in die Verriegelungslage und auch eine besonders hohe Lebensdauer dadurch bewirken, dass beispielsweise bei einer gewaltsamen oder schrägen Entnahme des Halteteils aus dem Aufnahmeteil durch einen Benutzer diese gegen die Kraft einer dritten Feder gehaltenen weiteren Sperrmittel den Weg freigeben um somit eine Beschädigung an den Stegen mit hakenartigen Vorsprung, die diese weiteren Sperrmittel hintergreifen und dort verhaken beziehungswiese verriegeln, ermöglichen.

Somit ist zum einen durch diese erfindungsgemäßen zusätzlichen Sperrmittel, die häufig durch in der Sperrlage vorgespannte Sperrschieber gebildet sind, die Lebensdauer insbesondere bei Fehlbedienungen der Schließvorrichtung deutlich erhöht. Zum anderen ist auch das Zuführen in die Verriegelungslage dadurch vereinfacht, dass die gegen die Kraft der dritten Feder vorgespannt gehaltenen Sperrschieber beim Einführen der Stege mit hakenartigen Vorsprung der Schubelemente nachgeben können um somit eine mögliche Beschädigung in diesem Bereich wirksam zu verhindern.

Weiter kann in einem besonders bevorzugtem Ausführungsbeispiel der Erfindung vorgesehen sein, dass das Halteteil eine Deckelplatte aufweist, die auf der der Grundplatte gegenüberliegenden Seite des Deckelteils angeordnet und mit der Grundplatte verbindbar oder verbunden ist, wobei die Stege mit hakenartigen Vorsprung jeweils in einer an der Deckelplatte ausgebildeten Ausnehmung angeordnet sind um dort an Teilen oder Randkanten des Aufnahmeteils zu verhaken und das Halteteil am Aufnahmeteil zu verriegeln.

Auch die Anordnung einer derartigen zusätzlichen Deckelplatte, die auf der gegenüberliegenden Seite des Deckelteils des Behältnisses angeordnet und mit der Grundplatte verbunden ist, erhöht die Stabilität des gesamten Halteteils deutlich, so dass auch bei groben Bedienvorgängen oder nicht lagegenauer Zuführung des Halteteils in das Aufnahmeteil die Schließvorrichtung vor Beschädigung geschützt ist und somit die Lebensdauer der gesamten Schließvorrichtung deutlich erhöht ist.

Zudem umfasst die vorliegende Erfindung ein Behältnis, insbesondere Tornister oder Rucksack mit einer Schließvorrichtung nach einem der vorhergehenden Ansprüche, wobei das Aufnahmeteil an der Außenseite einer Wandung des Behältnisses angeordnet ist und das Halteteil an einem relativ gegenüber der Wandung verschwenkbaren Deckelteil des Behältnisses angeordnet ist, wobei ferner das Halteteil an dem Aufnahmeteil lösbar verriegelbar ist und das Halteteil in der verriegelten Lage in einem Aufnahmebereich des Aufnahmeteils angeordnet ist.

Ein Ausführungsbeispiel der Erfindung ist in den Figuren dargestellt und im Folgenden näher beschrieben.

Es zeigt:
- Figur 1: eine Ausführungsbeispiel der Erfindung in Explosionsdarstellung;
- Figur 2: das Ausführungsbeispiel in verriegelter Lage geschnitten;
- Figur 3: desgleichen in entriegelter Lage mit zusammengeschobenen Schubelementen;
- Figur 4: desgleichen in einer weiteren Schnittansicht;
- Figur 5: eine Ausführungsbeispiel der Erfindung in Seitenansicht in einer vorpositionierten Darstellung;
- Figur 6: das Ausführungsbeispiel mit angehobenem Betätigungsgriff und zusammengeschobenen Schubelementen.

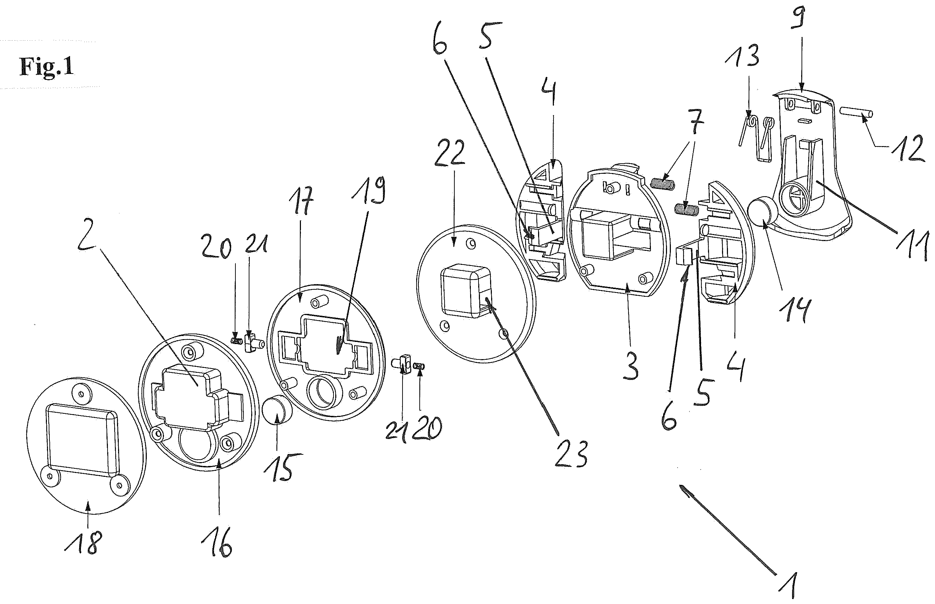

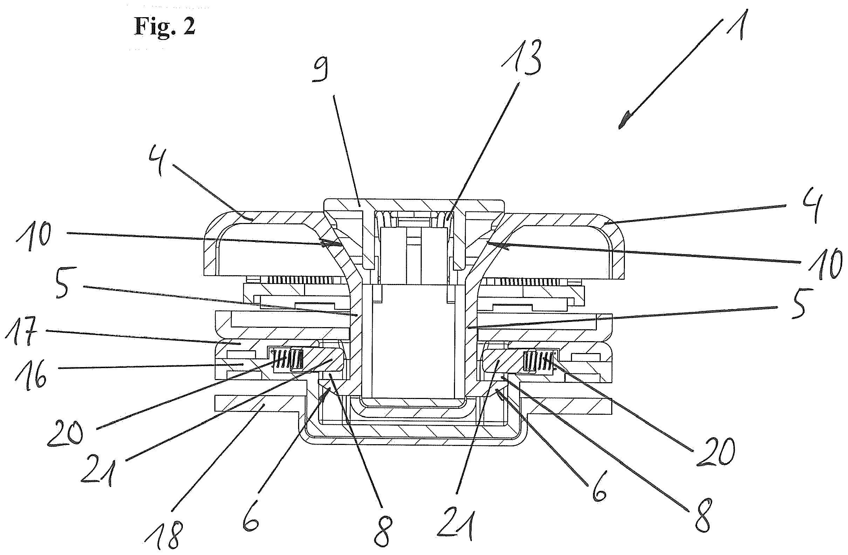

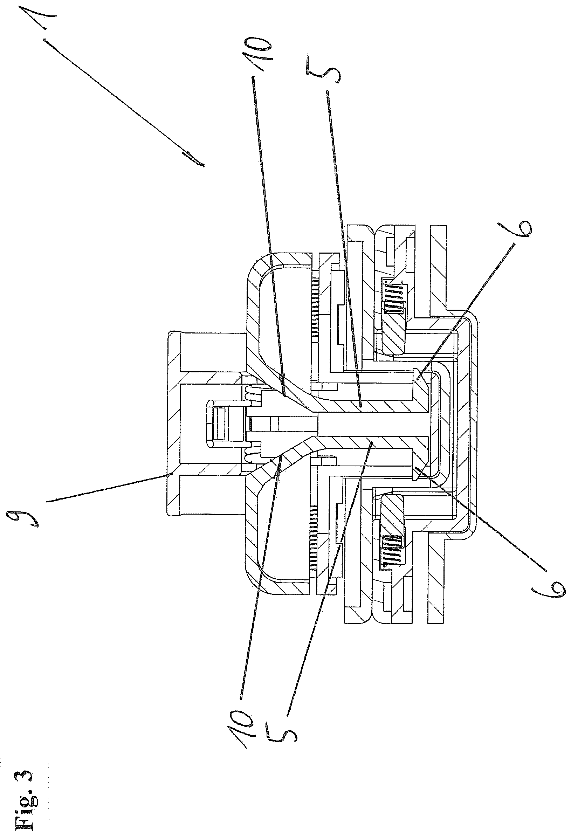

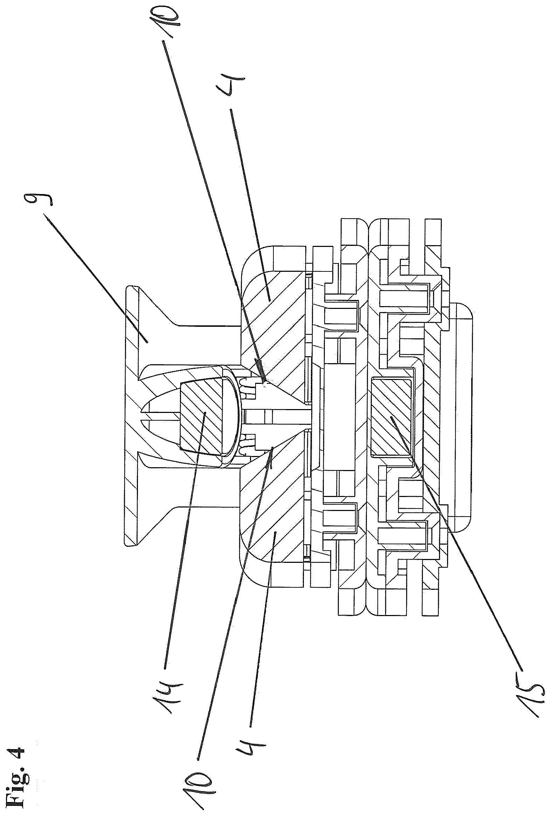

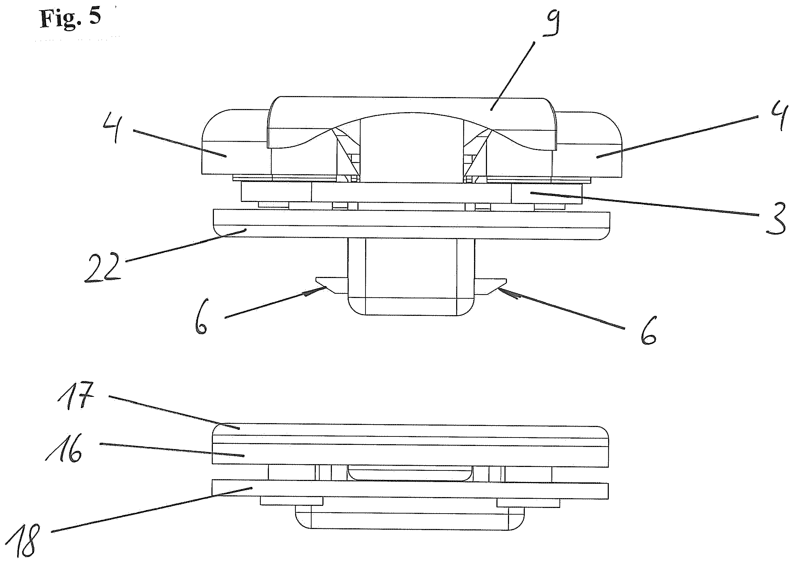

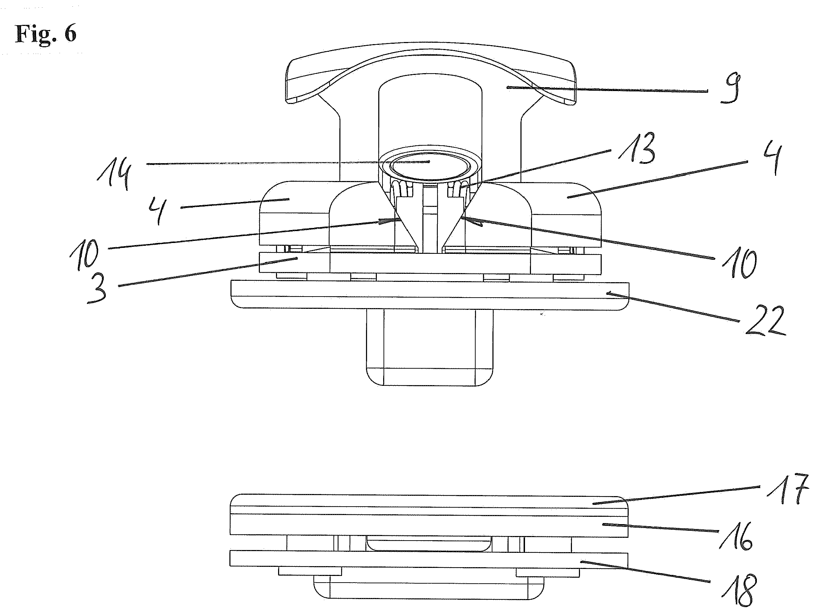

In den Figuren ist eine Schließvorrichtung 1 für ein in den Figuren nicht gezeigtes Behältnis wie beispielsweise ein Tornister oder ein Rucksack gezeigt. Die Schließvorrichtung 1 besteht im Ausführungsbeispiel aus einem Aufnahmeteil und einem Halteteil. Dabei besteht das Aufnahmeteil wiederum aus einem Unterteil 16 und einem mit dem Unterteil 16 in der Zusammenbaulage verbundenen Unterteildeckel 17. Zudem weist das Aufnahmeteil gemäß Ausführungsbeispiel der Erfindung eine Hinterplatte 18 auf, die an der dem Unterteildeckel 17 entgegengesetzten Seite des Unterteils 16 am Unterteil 16 befestigbar (Fig.1) beziehungsweise befestigt (Fig. 2 bis 6) ist.

Das Halteteil besteht im Ausführungsbeispiel aus einer Grundplatte 3 und einer mit der Grundplatte 3 verbindbaren oder verbundenen Deckelplatte 22. Auf der der Deckelplatte 22 gegenüberliegenden Seite der Grundplatte 3 sind zueinander verschiebbare Schubelemente 4 jeweils gegen die Kraft einer ersten Feder 7 angeordnet. Zudem ist auf dieser Seite ein gegenüber der Grundplatte 3 verschwenkbarer Betätigungsgriff 9 angeordnet.

Derartige Schließvorrichtungen 1 dienen dazu, das Deckelteil eines entsprechenden Behältnisses wie beispielsweise eines Tornisters oder eines Rucksacks an einer Außenwandung des Behältnisses anzuordnen und dort lagegesichert zu fixieren. Diese Fixierung erfolgt üblicherweise durch Verriegelung von Teilen des Halteteils an dem Aufnahmeteil.

Zur Benutzung des Behältnisses kann ein Aufnahmeraum des Behältnisses dadurch freigegeben werden, dass das Deckelteil nach Lösen der Verriegelung des Halteteils gegenüber des Aufnahmeteils verschwenkt wird und der Aufnahmeraum des Behältnisses freigegeben wird. Beim anschließenden Verschließen des Aufnahmeraums wird auf dieselbe Art und Weise in umgekehrter Richtung das Deckelteil wiederum verschwenkt und das Halteteil dem Aufnahmeteil angenähert bis entsprechende Rastelemente wie insbesondere hakenartige Vorsprünge in Teile des häufig muldenartig ausgebildeten Aufnahmebereichs 2 des Aufnahmeteils eingreifen und dort verhaken um das Deckelteil an dem Aufnahmeteil und somit der Wandung des Behältnisses zu fixieren.

Zur besonders vereinfachten Bedienung bei gleichzeitig hoher Lebensdauer weist das Halteteil der erfindungsgemäßen Schließvorrichtung 1 eine Grundplatte 3 mit gegenüber der Grundplatte 3 aufeinander zu und voneinander weg verschiebbaren Schubelementen 4 auf. Diese Schubelemente 4 dienen gleichzeitig als erstes Betätigungsmittel zur Aufhebung der Arretierung beziehungsweise Verriegelung und somit zum Öffnen und Verschwenken des Deckelteils des Behältnisses. Zum Öffnen muss also ein Bediener lediglich die Schubelemente 4 händisch aufeinander zu bewegen um die entsprechende hakenartige Verriegelung zu lösen. In dieser aufeinander zu verschobenen Lage der Schubelemente 4 sind die hakenartigen Vorsprünge 6 der Stege 5 nicht mehr mit Teilen des Aufnahmebereichs 2 des Aufnahmeteils in Eingriff und somit kann das Halteteil aus dem Aufnahmeteil heraus entfernt und das Deckelteil anschließend verschwenkt werden.

Zur Verriegelung ist dabei an jedem Schubelement 4 ein abragender und das Deckelteil durchgreifender und in den Aufnahmebereich 2 des Aufnahmeteils eingreifender und dort verhakender Steg 5 angeordnet. Die Verhakung erfolgt dabei jeweils im Bereich des freien Endes des Stegs 5, an dem jeweils ein hakenartiger Vorsprung 6 ausgebildet ist, der entsprechende Teile des Aufnahmeteils hintergreift und dort verhakt beziehungsweise verriegelt. Die Schubelemente 4 sind dabei jeweils durch die Kraft einer ersten Feder 7 in einer einander angenäherten Lage vorgespannt gehalten. In dieser Lage hintergreifen die hakenartigen Vorsprünge 6 keine Teile und die Verriegelung ist in dieser Lage nicht in Eingriff. Lediglich in der Lage, in der die Schubelemente 4 weiter voneinander entfernt sind, hintergreifen die hakenartigen Vorsprünge 6 der Stege 5 (bei 8) Teile des muldenartigen Aufnahmebereichs 2 des Aufnahmeteils. Dabei werden die Schubelemente 4 in dieser weiter voneinander entfernten Lage durch einen verschwenkbaren Betätigungsgriff 9, der teilweise zwischen den Schubelementen 4 angeordnet ist, gehalten. Der Betätigungsgriff 9 ist dabei als weiteres, alternatives Betätigungsmittel zur Entriegelung vorgesehen und angeordnet. Dieser zweite Betätigungsgriff 9 ist dabei gegen die Kraft einer zweiten Feder in der verriegelten Lage, innerhalb derer sich Teile des Betätigungsgriffs 9 zwischen den Schubelementen 4 befinden, gehalten. In dieser Lage ist das Annähern der Schubelemente 4 wirksam verhindert und die Schubelemente 4 sind somit in dieser Lage gesperrt.

Beim Verschwenken des Betätigungsgriffs 9 in eine den Schubelementen 4 und insbesondere der Grundplatte 3 angenäherte Lage kontaktiert eine am Betätigungsgriff 9 ausgebildete Kontur 11 jeweils eine als Gleitfläche ausgebildete Schräge 10 jedes Schubelementes 4 und verdrängt diese während der weiteren Annäherung an die Grundplatte 3. Sobald der Betätigungsgriff 9 seine der Grundplatte 3 angenäherte Lage erreicht hat, befindet sich die Kontur 11 zwischen den Schubelementen 4 und deren Schrägen 10 und sichert die Schubelemente 4 und insbesondere die an den Schubelementen 4 angeordneten Stege 5 mit hakenartigem Vorsprung 6 in dieser Verriegelungslage. Eine Entriegelung kann ausschließlich dadurch erfolgen, dass der Betätigungsgriff 9 aus dieser Lage in eine weiter von der Grundplatte 3 entfernte Lage verschwenkt wird, sodass die Schubelemente 4 sich einander annähern können.

Die Verschwenkung des Betätigungsgriffs 9 gegenüber der Grundplatte 3 des Halteteils erfolgt dabei um eine nahe einer Seitenrandkante des Halteteils angeordneten Schwenkachse 12. Durch eine derartige nahe einer Seitenrandkante des Halteteils beziehungsweise dessen Grundplatte 3 angeordneter Schwenkachse 12 ist ein maximaler Verschwenkweg des Betätigungsgriffs 9 ermöglicht.

Im Ausführungsbeispiel ist die zweite Feder durch eine Schenkelfeder 13 gebildet, die auf der Schwenkachse 12 angeordnet ist und deren erste Schenkel an der Grundplatte 3 und deren zweite Schenkel an den Betätigungsgriffen 9 angeordnet und befestigt sind. Dabei erfolgt die Verschwenkung des Betätigungsgriffs 9 in eine von der Grundplatte 3 entfernte Öffnungsrichtung gegen die Kraft der Schenkelfeder 13. Somit sorgt die Schenkelfeder 13 dafür, dass der Betätigungsgriff 9 und insbesondere dessen Kontur 11 die Schubelemente 4 in der Verriegelungslage sichert solange kein händisches Eingreifen beziehungsweise Verschwenken des Betätigungsgriffs 9 durch einen Benutzer erfolgt.

Zur erleichterten Zuführung und um einen gewissen zusätzlichen Halt in der Verriegelungslage zu ermöglichen ist am Betätigungsgriff 9 ein erstes magnetisches Element 14 und am Aufnahmeteil an einem dem ersten magnetisches Element 14 benachbarten Bereich, insbesondere am Unterteildeckel 17, ein zweites magnetisches Element 15 angeordnet. Dabei sind das erste und das zweite magnetisches Element 14, 15 einander anziehend angeordnet, sodass in der verriegelten Lage die magnetisches Element 14, 15 nahe aneinander angeordnet sind und sich gegenseitig anziehen. Dabei ist zum einen der Betätigungsgriff 9 in dieser Lage unterstützend gehalten und zum anderen das gesamte Halteteil am Aufnahmeteil gehalten.

Das Aufnahmeteil besteht im Ausführungsbeispiel aus einem Unterteil 16 mit einem Unterteildeckel 17 und einer Hinterplatte 18, wobei das Unterteil 16 den muldenartigen Aufnahmebereich 2 und der Unterteildeckel 17 eine etwa dazu deckungsgleiche Ausnehmung 19 aufweisen. Hierdurch ist das Einführen des eine ähnliche Größe und Form aufweisenden hervorstehenden Teils des Halteteils, welches beispielsweise an der Grundplatte 3 oder an der Deckelplatte 22 des Halteteils ausgebildet ist, besonders vereinfacht.

In dem in den Figuren gezeigten Ausführungsbeispiel sind am Unterteil 16 im Bereich der in der verriegelten Lage eingreifenden und dort verhakenden Stege 5 weitere Sperrmittel, im Ausführungsbeispiel ein in der Sperrlage gegen die Kraft einer dritten Feder 20 vorgespannter Sperrschieber 21, angeordnet. Dieser Sperrschieber 21 ist jeweils gegen die Kraft je einer dritten Feder 20 in eine Freigebelage verschiebbar und durch die Kraft der dritten Feder 20 in der Sperrlage gehalten.

Die Stege 5 des jeweiligen Schubelements 4 durchgreifen zumindest mit ihren hakenartigen Vorsprüngen 6 am freien Ende jeweils eine an der Deckelplatte 22 ausgebildete Ausnehmung 23 um in diesem Bereich an Teilen oder Randkanten des Aufnahmeteils zu verhaken oder wie im Ausführungsbeispiel hinter dem Sperrschieber 21 zu verhaken.

Zudem umfasst die Erfindung ein in den Figuren nicht dargestelltes Behältnis wie beispielsweise einen Tornister oder einen Rucksack mit einer erfindungsgemäßen Schließvorrichtung.

Die Erfindung ist nicht auf das Ausführungsbeispiel beschränkt, sondern im Rahmen der Offenbarung vielfach variabel insofern es nach einem der vorhergehenden Ansprüchen offenbart ist.

Alle in der Beschreibung und/oder Zeichnung offenbarten Einzel- und Kombinationsmerkmale werden als erfindungswesentlich angesehen.

### Bezugszeichenliste:

- 1): Schließvorrichtung
- 2): Aufnahme- und Befestigungsbereich
- 3): Grundplatte
- 4): Schubelement
- 5): Steg an 4
- 6): hakenartiger Vorsprung an 5
- 7): erste Feder
- 8): verhaken
- 9): Betätigungsgriff
- 10): Schräge an 4
- 11): Kontur an 9
- 12): Schwenkachse an 9 und 3
- 13): Schenkelfeder
- 14): erstes magnetisches Element
- 15): zweites magnetisches Element
- 16): Unterteil
- 17): Unterteildeckel
- 18): Hinterplatte
- 19): Ausnehmung an 17
- 20): dritte Feder
- 21): Sperrschieber
- 22): Deckelplatte
- 23): Bereich an 22

## Patentansprüche

1. Schließvorrichtung (1) für ein Behältnis wie beispielsweise ein Tornister oder ein Rucksack, zumindest aufweisend ein Aufnahmeteil, welches an einer Außenwandung des Behältnisses angeordnet und dort befestigt ist, welches einen muldenartigen Aufnahme- und Befestigungsbereich (2) aufweist, und ein Halteteil, welches an einem relativ zur Außenwandung verschwenkbaren oder verschwenkten Deckelteil des Behältnisses angeordnet und befestigt ist, wobei das Halteteil einen in Richtung des Aufnahmebereichs (2) vorragenden Verbindungs- und Verriegelungsbereich aufweist, der zur Verbindung und Verriegelung des Halteteils am Aufnahmeteil in dessen muldenartigen Aufnahmebereich (2) einführbar oder eingeführt ist und in der eingeführten Lage dort mittels hakenartiger Vorsprünge, die Teile des muldenartigen Aufnahmebereichs hintergreifen, gehalten und verriegelt ist, wobei an der dem Aufnahmeteil abgewandten Seite des Halteteils Betätigungsmittel angeordnet sind, die bei Betätigung die hakenartigen Vorsprünge in eine Lage verstellen, in der die Verhakung hinter Teilen des muldenartigen Aufnahmebereichs (2) aufgehoben ist, sodass das Deckelteil mitsamt des Halteteils von dem auf der Außenwandung angeordneten Aufnahmeteil abnehmbar und gegenüber der Außenwandung verschwenkbar ist, wobei das Halteteil eine Grundplatte (3) mit gegenüber der Grundplatte (3) aufeinander zu und voneinander weg verschiebbaren Schubelementen (4) als erstes Betätigungsmittel aufweist, wobei an jedem Schubelement (4) je ein abragender und das Deckelteil durchgreifender und in den Aufnahmebereich (2) des Aufnahmeteils eingreifender und dort verhakender Steg (5) angeordnet ist, wobei zur Verhakung und somit zur Verriegelung des Halteteils an dem Aufnahmeteil am freien Ende des Stegs (5) je ein hakenartiger Vorsprung (6) ausgebildet ist, wobei die Schubelemente (4) jeweils durch die Kraft einer ersten Feder (7) in einer einander angenäherten Lage gehalten sind, und wobei die hakenartigen Vorsprünge (6) in der weiter voneinander entfernten Lage der Schubelemente (4) Teile des muldenartigen Aufnahmebereichs (2) hintergreifen und dort verhaken (bei 8), wobei ferner ein gegenüber der Grundplatte (3) verschwenkbarer Betätigungsgriff (9) als weiteres Betätigungsmittel angeordnet ist, der gegen die Kraft einer zweiten Feder in der verriegelten Lage gehalten ist, wobei in dieser Lage Teile des Betätigungsgriffs (9) zwischen den Schubelementen (4) angeordnet sind und die Schubelemente (4) sperren beziehungsweise ein Annähern der Schubelemente (4) verhindern.

2. Schließvorrichtung (1) nach Anspruch 1, **dadurch gekennzeichnet, dass** die Schubelemente(4) an ihren jeweils benachbarten Seitenbereichen jeweils eine Schräge (10) als Gleitfläche aufweisen, die während des Verstellens in die Verriegelungslage von einer am Betätigungsgriff (9) ausgebildeten Kontur (11) kontaktiert ist und die die Schubelemente (4) gegen die Kraft der ersten Federn (7) in die Verriegelungslage verschiebt, in der der Abstand zwischen den beiden Schubelementen (4) vergrößert ist, die nach Erreichen der Verriegelungslage zwischen den als Gleitfläche ausgebildeten Schrägen (10) angeordnet ist, wobei an der jeweiligen Schräge (10) je einer der in den Aufnahmebereich (2) des Aufnahmeteils eingreifenden und dort verhakenden Stege (5) mit hakenartigem Vorsprung (6) angeordnet ist.

3. Schließvorrichtung (1) nach Anspruch 1 oder 2, **dadurch gekennzeichnet, dass** die Verschwenkung des Betätigungsgriffs (9) gegenüber der Grundplatte (3) des Halteteils entlang einer nahe einer Seitenrandkante des Halteteils angeordneten Schwenkachse (12) erfolgt.

4. Schließvorrichtung (1) nach Anspruch 3, **dadurch gekennzeichnet, dass** die zweite Feder durch eine Schenkelfeder (13) gebildet ist, die auf oder nahe der Schwenkachse (12) angeordnet ist und deren erste Schenkel an der Grundplatte (3) und deren zweite Schenkel am Betätigungsgriff (9) angeordnet und befestigt sind, wobei die Verschwenkung des Befestigungsgriffs (9) in eine von der Grundplatte(3) entfernte Öffnungsrichtung gegen die Kraft der Schenkelfeder (13) erfolgt.

5. Schließvorrichtung (1) nach einem der Ansprüche 1 bis 4, **dadurch gekennzeichnet, dass** am Betätigungsgriff (9) ein erstes magnetisches Element (14) und an dem Aufnahmeteil an einem dem ersten magnetischen Element (14) benachbarten Bereich ein zweites magnetisches Element (15) jeweils angeordnet ist, wobei das erste und das zweite magnetische Element (14,15) aneinander anziehend angeordnet sind, sodass in der verriegelten Lage die magnetischen Elemente (14,15) nah aneinander angeordnet sind und zum einen der Betätigungsgriff (9) in dieser Lage gehalten ist und zum anderen das Halteteil am Aufnahmeteil gehalten ist.

6. Schließvorrichtung (1) nach einem der Ansprüche 1 bis 5, **dadurch gekennzeichnet, dass** das Aufnahmeteil aus einem Unterteil (16) mit einem Unterteildeckel (17) und einer Hinterplatte (18) besteht, wobei das Unterteil (16) den muldenartigen Aufnahme- und Befestigungsbereich (2) und der Unterteildeckel (17) eine dazu etwa deckungsgleiche Ausnehmung (19) aufweist.

7. Schließvorrichtung (1) nach Anspruch 6, **dadurch gekennzeichnet, dass** am Unterteil (16) im Bereich der in der verriegelten Lage eingreifenden und dort verhakenden Stege (5) weitere Sperrmittel, beispielsweise jeweils an einer Seitenrandkante des Aufnahmebereichs (2) des Aufnahmeteils ein gegen die Kraft einer dritten Feder (20) in der Sperrlage vorgespannter Sperrschieber (21), angeordnet ist oder sind, wobei jedes Sperrmittel gegen die Kraft der dritten Feder (20) in eine Freigabelage verschiebbar ist.

8. Schließvorrichtung (1) nach einem der Ansprüche 1 bis 7, **dadurch gekennzeichnet, dass** das Halteteil eine Deckelplatte (22) aufweist, die auf der der Grundplatte (3) gegenüberliegenden Seite des Deckelteils angeordnet und mit der Grundplatte (3) verbindbar oder verbunden ist, wobei die Stege (5) mit hakenartigen Vorsprung (6) jeweils in einer an der Deckelplatte (22) ausgebildeten Ausnehmung angeordnet sind um dort an Teilen oder Randkanten des Aufnahmeteils zu verhaken und das Halteteil am Aufnahmeteil zu verriegeln.

9. Behältnis, insbesondere Tornister oder Rucksack mit einer Schließvorrichtung nach einem der vorhergehenden Ansprüche, wobei das Aufnahmeteil an der Außenseite einer Wandung des Behältnisses und das Halteteil an einem relativ gegenüber der Wandung verschwenkbaren Deckelteil des Behältnisses angeordnet sind, wobei ferner das Halteteil an dem Aufnahmeteil lösbar verriegelbar ist und das Halteteil in der verriegelten Lage in einem Aufnahmebereich (2) des Aufnahmeteils angeordnet ist.

## Claims

1. A closing device (1) for a container such as a knapsack or a rucksack, at least comprising a receiving part which is arranged on an outer wall of the container and fastened there, which has a trough-like receiving and fastening region (2), and a holding part which is arranged and fastened on a cover part of the container which can be pivoted or is pivoted relative to the outer wall, the holding part having a connecting and locking region projecting in the direction of the receiving region (2), which, for connecting and locking the holding part to the receiving part, can be inserted or is inserted into the trough-like receiving region (2) thereof and, in the inserted position, is held and locked there by means of hook-like projections which engage behind parts of the trough-like receiving region, actuating means being arranged on the side of the holding part facing away from the receiving part, which, when actuated, move the hook-like projections into a position in which hooking behind parts of the trough-like receiving area (2) is suppressed, so that the cover part together with the holding part can be removed from the receiving part arranged on the outer wall and can be pivoted relative to the outer wall, wherein the holding part has a base plate (3) with thrust elements (4) which can be displaced towards and away from each other relative to the base plate (3) as a first actuating means, wherein a projecting web (5) which engages through the cover part and engages in the receiving region (2) of the holding part and hooks there is arranged on each thrust element (4), wherein one hook-like projection (6) each is formed at the free end of the web (5) for hooking and thus for locking the holding part to the receiving part, wherein the thrust elements (4) are each held in a position approaching each other by the force of a first spring (7), and wherein the hook-like projections (6) engage behind parts of the trough-like receiving region (2) in the position of the thrust elements (4) further away from each other and hook there (at 8), wherein furthermore an actuating handle (9) pivotable relative to the base plate (3) is arranged as a further actuating means, which actuating handle is held in the locked position against the force of a second spring, wherein, in this position, parts of the actuating handle (9) are arranged between the thrust elements (4) and lock the thrust elements (4) or prevent the thrust elements (4) from approaching.

2. The closing device (1) according to claim 1, **characterized in that** the thrust elements (4) each have a slope (10) as a sliding surface on their respective adjacent side regions, which slope is contacted by a contour (11) formed on the actuating handle (9) during displacement into the locking position and which displaces the thrust elements (4) against the force of the first springs (7) into the locking position, in which the distance between the two thrust elements (4) is increased, which, after reaching the locking position, is arranged between the slopes (10) formed as sliding surfaces, wherein one of the webs (5) engaging in the receiving region (2) of the receiving part and hooking there is arranged with a hook-like projection (6) on the respective slope (10).

3. The closing device (1) according to claim 1 or 2, **characterized in that** pivoting of the actuating handle (9) relative to the base plate (3) of the holding part takes place along a pivot axis (12) arranged close to a side edge of the holding part.

4. The closing device (1) according to claim 3, **characterized in that** the second spring is formed by a leg spring (13) which is arranged on or near the pivot axis (12) and whose first leg is arranged and fastened on the base plate (3) and whose second leg is arranged and fastened on the actuating handle (9), pivoting of the actuating handle (9) taking place in an opening direction remote from the base plate (3) against the force of the leg spring (13).

5. The closing device (1) according to one of claims 1 to 4, **characterized in that** a first magnetic element (14) is arranged on the actuating handle (9) and a second magnetic element (15) is arranged on the receiving part in a region adjacent to the first magnetic element (14), the first and second magnetic elements (14, 15) being arranged to attract each other, so that, in the locked position, the magnetic elements (14, 15) are arranged close to each other, and on the one hand the actuating handle (9) being held in this position, and on the other hand the holding part being held on the receiving part.

6. The closing device (1) according to one of claims 1 to 5, **characterized in that** the receiving part consists of a lower part (16) with a lower part cover (17) and a rear plate (18), the lower part (16) having the trough-like receiving and fastening region (2) and the lower part cover (17) having an approximately congruent recess (19).

7. The closing device (1) according to claim 6, **characterized in that** further locking means, for example a locking slide (21) in the locked position biased against the force of a third spring (20), is or are arranged on the lower part (16) in the region of the webs (5) engaging in the locked position and hooking there, each locking means being displaceable against the force of the third spring (20) into a release position.

8. The closing device (1) according to one of claims 1 to 7, **characterized in that** the holding part has a cover plate (22) which is arranged on the side of the cover part opposite the base plate (3) and can be connected or is connected to the base plate (3), the webs (5) with hook-like projections (6) each being arranged in a recess formed on the cover plate (22) in order to hook there on parts or side edges of the receiving part and to lock the holding part to the receiving part.

9. A container, in particular a knapsack or rucksack with a closing device according to one of the preceding claims, wherein the receiving part is arranged on the outside of a wall of the container and the holding part is arranged on a cover part of the container which can be pivoted relative to the wall, wherein furthermore the holding part can be releasably locked to the receiving part and the holding part is arranged in the locked position in a receiving region (2) of the receiving part.

## Revendications

1. Dispositif de fermeture (1) pour un récipient tel qu'un cartable ou un sac à dos, présentant au moins une partie de réception qui est disposée sur une paroi extérieure du récipient et y est fixée, laquelle présente une zone de réception et de fixation (2) en forme de cuvette, et une partie de maintien qui est disposée et fixée sur une partie de couvercle du récipient pouvant pivoter ou pivotant par rapport à la paroi extérieure, la partie de maintien présentant une zone de liaison et de verrouillage faisant saillie en direction de la zone de réception (2), qui, pour la liaison et le verrouillage de la partie de maintien sur la partie de réception, peut être introduite ou est introduite dans sa zone de réception (2) en forme de cuvette et qui, dans la position introduite, y est maintenue et verrouillée au moyen de saillies en forme de crochets qui s'engagent derrière des parties de la zone de réception en forme de cuvette, des moyens d'actionnement étant disposés sur le côté de la partie de maintien opposé à la partie de réception, lesquels, lors de l'actionnement, déplacent les saillies en forme de crochets dans une position dans laquelle l'accrochage derrière des parties de la zone de réception (2) en forme de cuvette est supprimé, de sorte que la partie de couvercle, y compris la partie de maintien, peut être retirée de la partie de réception disposée sur la paroi extérieure et peut pivoter par rapport à la paroi extérieure, la partie de maintien présentant une plaque de base (3) avec des éléments de poussée (4) pouvant être rapprochés et éloignés les uns des autres par rapport à la plaque de base (3) en tant que premier moyen d'actionnement, sur chaque élément de poussée (4) étant disposée une entretoise (5) en saillie, traversant la partie de couvercle et s'engageant dans la zone de réception (2) de la partie de réception et s'y accrochant, une saillie (6) en forme de crochet étant formée à l'extrémité libre de l'entretoise (5) pour l'accrochage et donc le verrouillage de la partie de maintien sur la partie de réception, les éléments de poussée (4) étant maintenus chacun par la force d'un premier ressort (7) dans une position rapprochée l'une de l'autre, et les saillies (6) en forme de crochets s'engageant, dans la position plus éloignée l'une de l'autre des éléments de poussée (4), derrière des parties de la zone de réception (2) en forme de cuvette et s'y accrochant (à 8), une poignée d'actionnement (9) pouvant pivoter par rapport à la plaque de base (3) étant en outre disposée en tant qu'autre moyen d'actionnement, qui est maintenue dans la position verrouillée contre la force d'un deuxième ressort, des parties de la poignée d'actionnement (9) étant disposées dans cette position entre les éléments de poussée (4) et bloquant les éléments de poussée (4) ou empêchant un rapprochement des éléments de poussée (4).

2. Dispositif de fermeture (1) selon la revendication 1, **caractérisé en ce que** les éléments de poussée (4) présentent sur leurs zones latérales respectivement voisines chacun un plan incliné (10) comme surface de glissement, qui est en contact pendant le déplacement dans la position de verrouillage avec un contour (11) formé sur la poignée d'actionnement (9) et qui déplace les éléments de poussée (4) contre la force des premiers ressorts (7) dans la position de verrouillage, dans laquelle la distance entre les deux éléments de poussée (4) est augmentée, qui est disposée, après avoir atteint la position de verrouillage, entre les plans inclinés (10) réalisés sous forme de surfaces de glissement, l'une des entretoises (5) s'engageant dans la zone de réception (2) de la partie de réception et s'y accrochant étant disposée sur le plan incliné (10) respectif avec une saillie (6) en forme de crochet.

3. Dispositif de fermeture (1) selon la revendication 1 ou 2, **caractérisé en ce que** le pivotement de la poignée d'actionnement (9) par rapport à la plaque de base (3) de la partie de maintien s'effectue le long d'un axe de pivotement (12) disposé à proximité d'un bord latéral de la partie de maintien.

4. Dispositif de fermeture (1) selon la revendication 3, **caractérisé en ce que** le deuxième ressort est formé par un ressort à branches (13) qui est disposé sur ou à proximité de l'axe de pivotement (12) et dont les premières branches sont disposées et fixées sur la plaque de base (3) et dont les deuxièmes branches sont disposées et fixées sur la poignée d'actionnement (9), le pivotement de la poignée d'actionnement (9) dans une direction d'ouverture éloignée de la plaque de base (3) s'effectuant contre la force du ressort à branches (13).

5. Dispositif de fermeture (1) selon l'une des revendications 1 à 4, **caractérisé en ce qu'**un premier élément magnétique (14) est disposé sur la poignée d'actionnement (9) et un deuxième élément magnétique (15) est disposé sur la partie de réception dans une zone voisine du premier élément magnétique (14), le premier et le deuxième élément magnétique (14, 15) étant disposés de manière à s'attirer l'un l'autre, de sorte que, dans la position verrouillée, les éléments magnétiques (14, 15) sont disposés à proximité l'un de l'autre et, d'une part, la poignée d'actionnement (9) est maintenue dans cette position et, d'autre part, la partie de maintien est maintenue sur la partie de réception.

6. Dispositif de fermeture (1) selon l'une des revendications 1 à 5, **caractérisé en ce que** la partie de réception est constituée d'une partie inférieure (16) avec un couvercle inférieur (17) et une plaque arrière (18), la partie inférieure (16) présentant la zone de réception et de fixation (2) en forme de cuvette et le couvercle inférieur (17) présentant un évidement (19) à peu près confondu à celui-ci.

7. Dispositif de fermeture (1) selon la revendication 6, **caractérisé en ce que** d'autres moyens de blocage, par exemple un coulisseau de blocage (21) précontraint contre la force d'un troisième ressort (20) dans la position de blocage, sont disposés sur la partie inférieure (16) dans la zone des entretoises (5) qui s'engagent dans la position verrouillée et s'y accrochent, chaque moyen de blocage pouvant être déplacé dans une position de libération contre la force du troisième ressort (20).

8. Dispositif de fermeture (1) selon l'une des revendications 1 à 7, **caractérisé en ce que** la partie de maintien présente une plaque de couvercle (22) qui est disposée sur le côté de la partie de couvercle opposé à la plaque de base (3) et qui peut être reliée ou est reliée à la plaque de base (3), les entretoises (5) avec des saillies (6) en forme de crochets étant disposées chacune dans un évidement formé sur la plaque de couvercle (22) pour s'y accrocher à des parties ou à des bords de la partie de réception et pour verrouiller la partie de maintien à la partie de réception.

9. Récipient, en particulier cartable ou sac à dos avec un dispositif de fermeture selon l'une des revendications précédentes, dans lequel la partie de réception est disposée sur le côté extérieur d'une paroi du récipient et la partie de maintien sur une partie de couvercle du récipient pouvant pivoter par rapport à la paroi, dans lequel en outre la partie de maintien peut être verrouillée de manière amovible sur la partie de réception et la partie de maintien est disposée dans la position verrouillée dans une zone de réception (2) de la partie de réception.
